# EUROPEAN PATENT SPECIFICATION

(11) **EP 3 517 751 B1**
(45) Date of publication and mention of the grant of the patent: **01.11.2023**
(21) Application number: 18153329.0
(22) Date of filing: 24.01.2018
(51) Int. Cl.: F01N 3/20, B01D 29/13, F01N 13/18, F01N 13/16, B01D 29/21, B01D 29/92

(54) **FILTER DEVICE COMPRISING A VOLUME COMPENSATING ASSEMBLY**
FILTERVORRICHTUNG MIT VOLUMENKOMPENSIERENDER ANORDNUNG
DISPOSITIF DE FILTRE COMPRENANT UN ENSEMBLE DE COMPENSATION DE VOLUME

(43) Date of publication of application: 31.07.2019
(73) Proprietor: Donaldson Company, Inc., Bloomington, MN 55431 (US)
(72) Inventor: SPINCEMAILLE, Klaas, B-3012 Wilsele (BE); STOUTHUYSEN, Gwenolé, B-3380 Glabbeek (BE); VANDERLINDEN, Tom Jules, B-1390 Grez-Doiceau (BE)
(74) Representative: Beck, Michaël Andries T.

(56) References cited:
- DE-A1-102006 040 411
- DE-A1-102012 223 028
- DE-B3-102012 005 733
- US-A1- 2005 263 451
- US-A1- 2012 132 582

## Description

### Field of the Invention

The present invention pertains to the field of filters for liquid dispensing systems, such as those used to dispense urea solutions in selective catalytic reduction (SCR) systems that reduce the emission of NOₓ compounds in the exhaust gas of internal combustion engines.

### Background

Urea modules are used in vehicles with an internal combustion engine to pump an aqueous urea solution (commercially known as AdBlue) from a dedicated tank to the exhaust gas circuit, where the urea acts as a precursor for the formation of ammonia, which selectively reduces the NOₓ in the exhaust gas in a catalytic reaction so as to meet applicable emission standards.

The problem with the aqueous urea solution is that it has a relatively high freezing point, at approximately -11°C for the eutectic mixture. Upon freezing, the solution expands, so any system components that are prone to containing urea when freezing occurs, must be designed to withstand the expansion. One way of meeting that requirement is by providing a compensation volume.

US patent application publication no. US 2005/077230 A1, assigned to MANN+HUMMEL GmbH, entitled "Liquid filter device", discloses a filtering device for filtering liquids, with a filter element located in a filter housing and flown through by the liquid to be filtered, wherein in the filter housing a deformable compensating element (cover, ring, bottom disk) is arranged directly at at least one front end of the filter element, the deformation of which can change the volume of at least one section of the flow path of the liquid to be filtered in the filter housing.

German patent application publication no. DE 10 2012 223028 A1, in the name of Robert Bosch GmbH, discloses a device having a housing and a deformable compensation element arranged in the housing, where the compensation element forms a fluid-carrying space with the housing. A damping element is arranged on the side of the compensation element, so that the deformation of the compensation element is reformed under the effect of the damping element on the compensation element, when there is no outside pressure in fluid-carrying space. The compensation element is made from acrylonitrile butadiene rubber. Publication DE102012005733B3 also discloses a filter assembly with a volume compensation element.

It is a disadvantage of the known devices that the deformable volume compensating element, in its uncompressed form, leaves a significant amount of open space inside the internal cavity of the filter media, in which residual liquid remains, which is prone to freezing and thus expanding when temperatures drop.

It is a further disadvantage of the known devices that the deformable volume compensating element is prone to wear due to material fatigue after repeated deformation cycles.

Accordingly, there is a need for a filter element with a deformable volume compensating element that mitigates these disadvantages.

### Summary

The problem of volume compensation is solved with a device for filtering liquids according to claim 1.

Whereas the elongate volume compensating element is meant to be deformable under the exercise of external pressure, so as to free up an amount of volume, the term "uncompressed state" refers to the shape of the elongate volume compensating element when no outside pressure is applied to it beyond the normal operating pressure of the liquid dispensing system. The term "normal operating pressure" refers to an acceptable range around the nominal operating pressure. In some systems, the nominal operating pressure may be 9 bar or close to 9 bar. For other systems, the nominal operating pressure may be 6 bar or close to 6 bar. Other nominal operating pressures are possible in other systems. The acceptable range may be a range of +/- 10% around the nominal operating pressure. In other systems, the acceptable range may be smaller or larger.

The invention is based *inter alia* on the insight of the inventors that increasing the volume of a volume compensating element to such an extent that it substantially fills at least 90% of the entire cavity on the inside of a substantially tubular filter media, has a double action: on the one hand, it provides a greater compressible volume to free up space for the expansion of the liquid as it comes under pressure or freezes; on the other hand, it reduces the amount of liquid present in the cavity, and thus in the system as a whole, which reduces the need for expansion space.

The invention is further based on the insight of the inventors that by providing the first end cap and the elongate volume compensating element as a single part, removing a fully assembled filter element (including the volume compensating assembly according to the present invention) from its housing becomes simpler.

In an embodiment of the volume compensating assembly according to the present invention, the filter media is potted to the first end cap.

It is an advantage of this embodiment that it combines the first end cap, the volume compensating assembly attached to it, and the filter media into a solid whole, that can easily be inserted into a housing or removed from a housing.

In an embodiment of the volume compensating assembly according to the present invention, the elongate volume compensating element comprises, at its end most removed from the first end cap, coupling means configured to engage with to a second end cap in a manner suitable to transmit a pulling force.

It is an advantage of this embodiment that it can be used to assemble a rigid filter element, which can be pulled out of a housing by pulling on the first end cap, whereby the elongate volume compensating element transmits the pull force to the second end cap via the coupling means, thus ensuring that the assembled filter media can be retrieved as a whole.

In an embodiment of the volume compensating assembly according to the present invention, the coupling means is configured to remain disengaged from the second end cap when the volume compensating assembly is installed and to only engage with the second end cap when the volume compensating element is pulled away from the second end cap.

In this embodiment, the coupling between the elongate volume compensating element and the second end cap is loose in the installed condition, allowing sufficient play to accommodate thermal expansion of the parts, while the elongate volume compensating element only engages with the second end cap when the elongate volume compensating element is pulled away from the second end cap (in particular, when the filter element is pulled out of the housing and the resulting tensile force cannot be completely absorbed by the potting that keeps the filter media and the second end cap together, in which case the filter media could tear or come off of the second end cap and the whole is kept together by the coupling between the elongate volume compensating element and the second end cap).

In an embodiment of the volume compensating assembly according to the present invention, the first end cap comprises a ridge configured to receive a seal.

It is an advantage of this embodiment that the assembly can be provided with an adequate seal, such as an O-ring, prior to sale. The O-ring, once installed, ensures proper sealing between the fully assembled filter element and the housing in which it is installed.

In an embodiment of the volume compensating assembly according to the present invention, the elongate volume compensating element is substantially cylindrical or frustoconical.

These shapes are most suited to substantially fill the axial cavity at the center of a substantially tubular filter media.

In an embodiment of the volume compensating assembly according to the present invention, the first end cap comprises a pull ring arranged to pull the filter media from a housing.

It is an advantage of this embodiment that it facilitates the removal of a fully assembled filter element from a housing in which it is installed.

In an embodiment of the volume compensating assembly according to the present invention, the first end cap is made from a first material and the elongate volume compensating element is made from a second material, the second material having a lower elastic modulus than the first material.

It is an advantage of this embodiment that the elongate volume compensating element can be made sufficiently elastic to ensure that it can fulfill its role as a collapsible filler in the cavity, while maintaining sufficient mechanical rigidity for the first end cap.

Additionally or alternatively, the required elasticity of the volume compensating element may be obtained by structural properties of this part, which may be provided with grooves, restrictions, folds, etc. to facilitate a graceful, reversible, volume-reducing collapse (e.g. a harmonica shape).

The term "substantially fill the internal cavity" is used to denote the situation where the radial play between the elongate volume compensating element and the part of the filter media that delineates its internal cavity is just sufficient to allow normal operation of the filter, i.e. passage of liquid entering through an inlet orifice of the housing, from the "dirty" side of the filter medium to the "clean" side of the filter medium, and further on to an outlet orifice of the housing. In particular, the term "substantially fill the internal cavity" may mean that the maximum amount of radial play between the elongate volume compensating element and the part of the filter media that delineates its internal cavity, at any given point along the axis of the filter medium, is no more than 2 mm, preferably no more than 1 mm, and most preferably no more than 0.5 mm. The term "substantially fill the internal cavity" denotes the situation where the volume compensating element fills at least 90% of the volume of the internal cavity of the filter media.

The technical effects and advantages of embodiments of the device according to the present invention correspond, *mutatis mutandis,* to those of the corresponding embodiments of the volume compensating assembly according to the present invention.

In an embodiment of the device according to the present invention, the filter media is potted to the second end cap.

It is an advantage of this embodiment that it combines the first end cap, the volume compensating assembly attached to it, the filter media, and the second end cap into a solid whole, that can easily be inserted into a housing or removed from a housing.

In an embodiment of the device according to the present invention, the second end cap comprises a ridge configured to receive a seal. In an embodiment of the device according to the present invention, the second end cap comprises a pull ring arranged to pull said filter media from a housing.

It is an advantage of this embodiment that it places the fixed connection between the elongate volume compensating element and the first end cap on the inner (not user-accessible) side of the housing and the other (preferably potted) connection on the serviceable side. This arrangement avoids the risk of detachment of those parts during removal of the device, which could otherwise lead to an end cap remaining stuck in a hard-to-reach part of the housing.

### Brief Description of the Figures

These and other features and advantages of embodiments of the present invention will now be described in more detail with reference to the accompanying drawings, in which:
- Figure 1 illustrates an AdBlue filtering device according to the prior art;
- Figure 2 is a perspective view of a filtering device according to an embodiment of the present invention;
- Figure 3 is another perspective view of the embodiment of Figure 2;
- Figure 4 is another perspective view of the embodiment of Figure 2;
- Figure 5 is another perspective view of the embodiment of Figure 2;
- Figure 6 presents perspectives of two variants of the filter device according to the present invention;
- Figure 7 presents sectional perspectives of two variants of the filter device according to the present invention;
- Figure 8 presents exploded perspectives of two variants of the filter device according to the present invention and
- Figure 9 presents a sectional perspective of a filtering device not representing the invention.

### Detailed Description of Embodiments

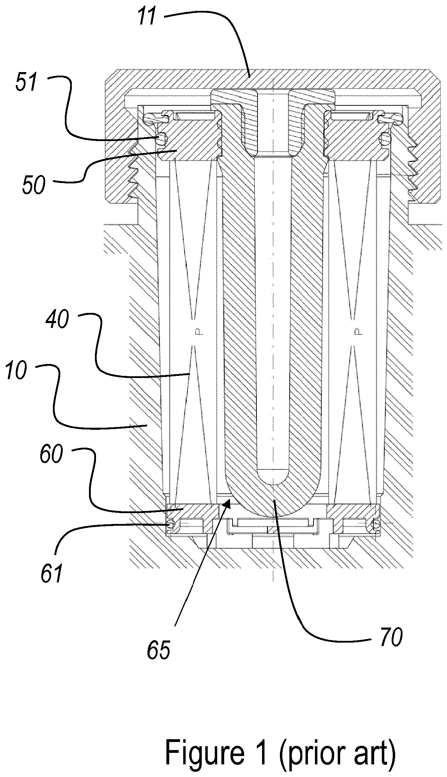

Figure 1 illustrates an AdBlue filtering device according to the prior art, as presently marketed by companies such as BOSCH and Cummins. The known solution uses a folded or pleated filter media **40** with plastic end caps **50, 60,** into whose cylindrical internal cavity **65** a hollow finger-shaped elastic element **70** (made of HNBR rubber) can be axially inserted. The end caps **50, 60** are provided with respective O-rings **51, 61** that are compressed against the inner wall of the cylindrical housing cavity **10** (illustrated in a simplified form, for conciseness reasons).

The open end of the finger-shaped elastic element **70** sealingly engages with the lid **11** of the filter compartment, which is provided with a breathing orifice. Upon expansion of any urea that may be present in the module, and in particular in the cavity **65,** the finger-shaped elastic element **70** is compressed, forcing out the air contained therein through the breathing orifice in the lid **11.**

This known solution presents at least the disadvantages described above, of leaving residual liquid inside the cavity and being subject to material fatigue.

In addition, as the O-ring seals **51, 61** that are compressed between the end caps **50, 60** and the inner wall of the cylindrical housing cavity **10** provide a significant amount of friction, in view of the fact that they have to be able to withstand a urea pressure of up to 9 bar, removing the filter element (**40, 50, 60**) from the housing **10,** after removal of the lid **11** and the finger-shaped element **70,** is quite cumbersome and may require a special tool. In extreme cases, the filter element may be damaged in the process, and a part - e.g. the end cap **60** - may remain inside the housing **10** if the connection between the media **40** and the end cap **60** is not adequate.

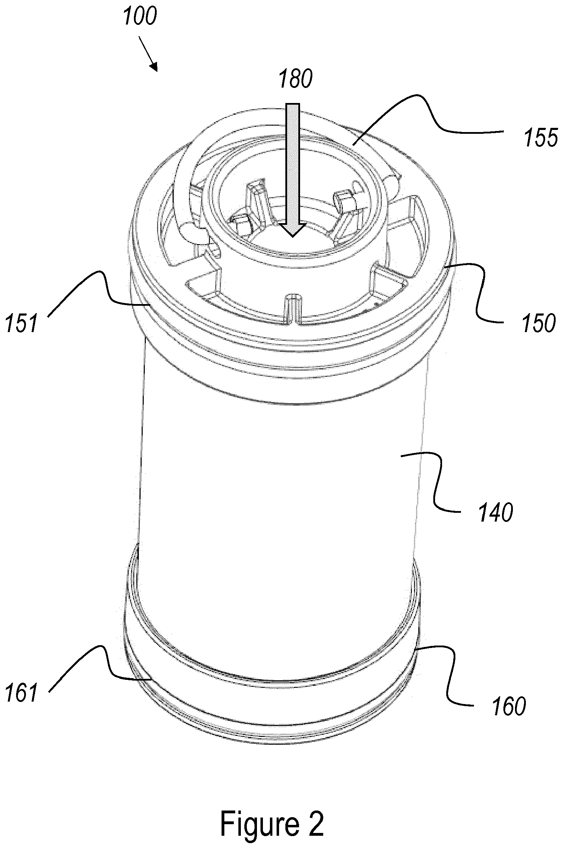

Figure 2 is a perspective view of a fully assembled device **100** according to an embodiment of the present invention. A filter media **140,** such as a pleated filter media, in particular of a type suitable for filtering AdBlue, is delimited by a first end cap **150** (on the top side, in the illustrated orientation) and a second end cap **160** (on the bottom side, in the illustrated orientation). The first end cap carries a first seal **151,** preferably a radial seal such as an O-ring provided in a suitable groove. The second end cap carries a second seal **161,** preferably a radial seal such as an O-ring provided in a suitable ridge. The first end cap **150** is in one piece with a volume compensating element protruding therefrom, preferably in a direction substantially perpendicular to the plane of the first end cap **150** (not visible in this figure), and is provided with a pull-ring or handle **155** to facilitate manual removal of the filter device **100** from a housing (not shown in this figure).

The volume compensating element may be smooth or present structural properties imparting to it the required elasticity (e.g. grooves, restrictions, folds, etc. to facilitate a graceful, reversible, volume-reducing collapse. The volume compensating element may be rounded at its distal (closed) end.

The volume compensating element is preferably hollow, having an open end **180** in fluid communication with the atmosphere. When the volume compensating element is compressed under the influence of a pressure increase in the internal cavity of the filter media **140,** air escapes through the open end **180;** when the pressure in **the** internal cavity of the filter media **140** returns to a normal operating value, the volume compensating element resumes its normal shape and the hollow cavity sucks in air through the open end **180.**

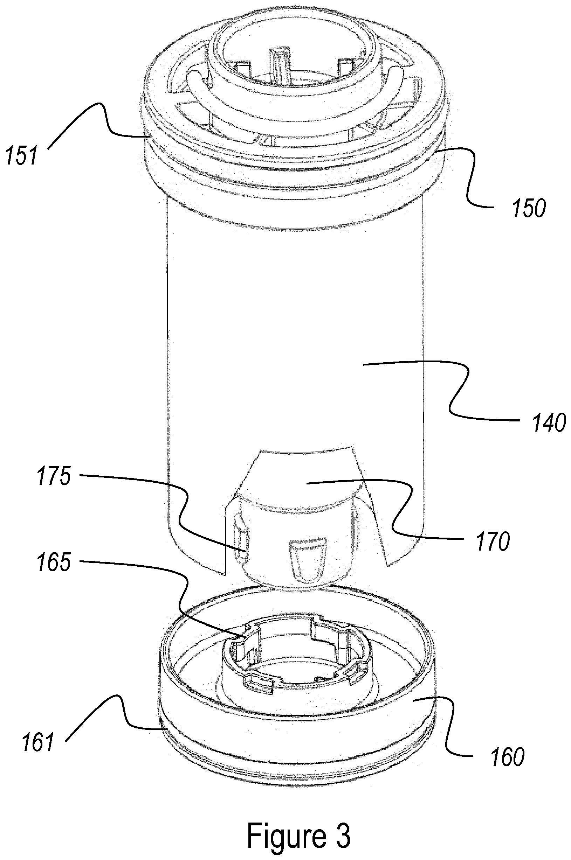

Figure 3 is another perspective view of the embodiment of Figure 2, in a disassembled state, whereby part of the filter media **140** has been cut away to reveal the volume compensating element **170** with its coupling means **175** and the complementary coupling means **165** on the second end cap **160,** which provide the coupling between the volume compensating element **170** and the second end cap **160.**

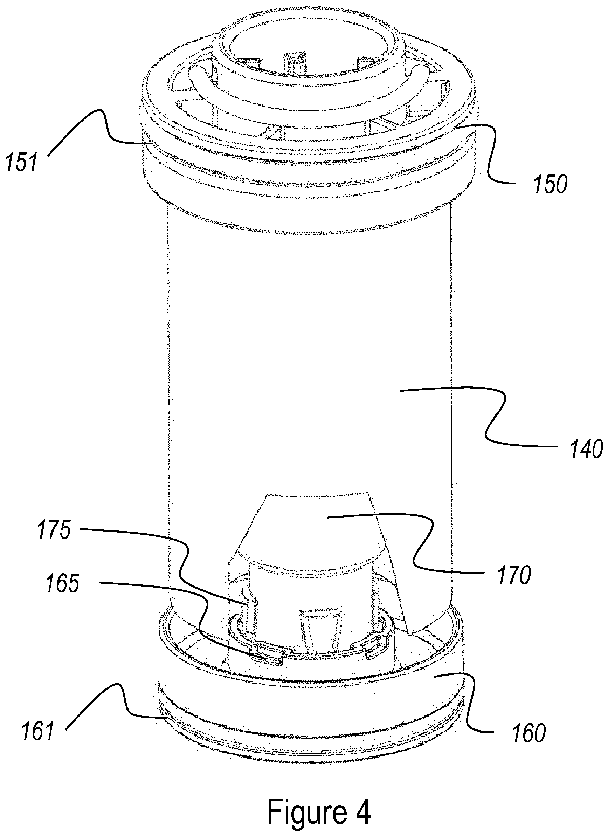

Figure 4 is another perspective view of the embodiment of Figure 2, in a partly assembled state, whereby part of the filter media **140** has been cut away to reveal the volume compensating element **170** with its coupling means **175** and the complementary coupling means **165** on the second end cap **160.**

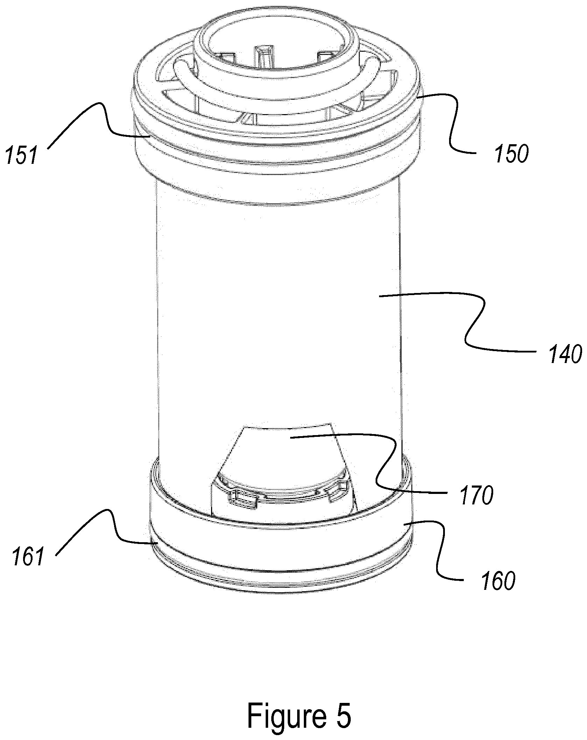

Figure 5 is another perspective view of the embodiment of Figure 2, in a fully assembled state, whereby part of the filter media **140** has been cut away to reveal the volume compensating element **170** with its coupling means **175** and the complementary coupling means **165** on the second end cap **160.** Upon assembly, the distal end of the filter media **140** is preferably permanently coupled to the second end cap **160** by means of an adequate potting or adhesive. In addition, the volume compensating element **170** loosely engages with the second end cap **160** by slightly rotating the first end cap **150** so as to pivot the coupling means **175** of the volume compensating element **170** behind the coupling means **165** of the second end cap **160.**

The coupling means **175** and the complementary coupling means **165** are shaped and positioned so as to avoid disengagement of the second end cap **160** from the volume compensating element **170** when the assembly is pulled out from its housing, involving a tensile force which may not be successfully withstood by the potting or the adhesive alone, especially in view of the friction caused by the seal **161** on the second end cap **160.**

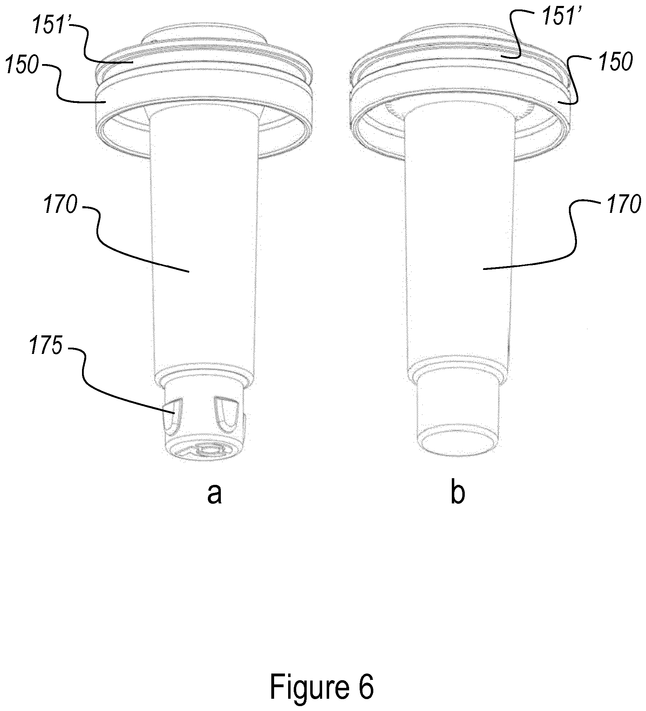

Figure 6 presents perspectives of two variants of the volume compensating assembly according to the present invention.

It comprises a first end cap **150** and an elongate volume compensating element **170** arranged perpendicularly to the first end cap **150.** The elongate volume compensating element **170** is shaped, in its uncompressed state, so as to substantially fill an internal cavity of a substantially tubular filter media when the first end cap **150** is arranged on an end of the filter media (not shown in the present figure).

The first end cap **150** may comprise a ridge **151'** configured to receive a seal (the seal itself is not present in the illustrated embodiments).

As illustrated, the elongate volume compensating element **170** is substantially frustoconical. The deviation from a true cylinder is preferably less than 5°, more preferably less than 1.5°, even more preferably less than 1°, and most preferably around 0.5°, which is approximately the minimum required draft angle to facilitate the manufacturing of the volume compensating element **170.** The deviation is preferably no more than what is required as a draft angle to permit demolding of the parts during manufacturing. Other possible shapes include substantially cylindrical shapes, prismatic shapes, or shapes specifically designed to gracefully collapse under pressure.

The entire volume compensating assembly may be made from a single material. Alternatively, the first end cap **150** may be made from a first material and the elongate volume compensating element **170** may be made from a second material, whereby the second material has a lower elastic modulus than the first material. In the latter case, the elongate volume compensating element **170** may be made from a rubber that is vulcanized to a plastic end cap **150.**

The variant labeled "a" (left-hand side) differs from the variant labeled "b" (right-hand side) in that the variant labeled "a" is provided, at its end most removed from the first end cap **150,** with coupling means **175** (in particular, a set of protrusions), which are designed to couple with complementary grooves or notches in the second end cap (not shown in this figure), providing at least pull-resisting positive engagement between the volume compensating element **170** and the second end cap (not illustrated), preferably in a bayonet-type coupling; in this case, a small amount of relative rotation between the volume compensating element **170** and the second end cap is required to bring the respective coupling means into their engaged position. Additionally or alternatively, the coupling may be of the snap-fit type. In addition, a traditional adhesive means (potting or gluing) is used to keep the respective parts together independently of the engagement provided by the coupling means.

In the variant labeled "b", the second end cap would have to be attached to the elongate volume compensating element **170** in a traditional way (e.g. using just potting or gluing), whereby the attachment must be able to withstand the tensile force applied during removal of the filter element from a housing.

The volume compensating element may protrude beyond the end plane of the media pack, and even beyond the end plane of the second end cap. The second end cap may have a slightly smaller diameter than the first end cap, to facilitate insertion and removal of the assembly (e.g., for filter replacement), in which case the media pack may be slightly conical as well.

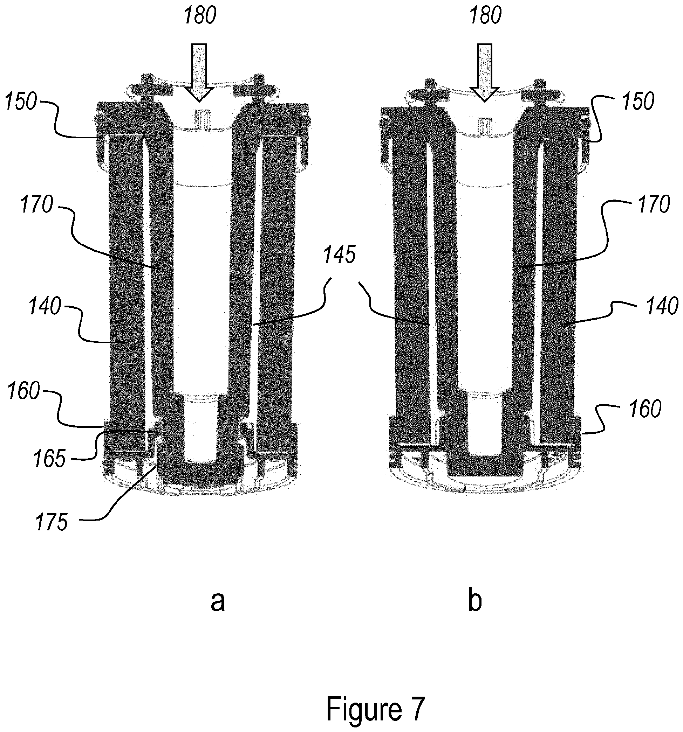

Figure 7 presents sectional perspectives of two variants of the filter device **100** according to the present invention, based on the corresponding variants of the volume compensating assemblies of Figure 6. The device **100** comprises a filter media **140** having an internal cavity **145.** In the illustrated, assembled state of the filter device **100,** the internal cavity **145** is substantially filled by the deformable volume compensating element **170,** part of which is inserted into said internal cavity **145.** A first end cap **150** is arranged at a first end of said filter media **140** (the top end in the illustrated orientation). A second end cap **160** is arranged at a second end of said filter media **140** (the bottom end in the illustrated orientation).

As in Figure 6, the elongate volume compensating element **170** is attached to the first end cap **150,** such that the elongate volume compensating element **170** must be arranged in the internal cavity **145** of the filter media **140** when the first end cap **150** is assembled onto the filter media **140.** The elongate volume compensating element **170** extends to the second end cap **160,** and it may even partly protrude beyond the second end cap **160** (as in the illustrated case, wherein a part of the elongate volume compensating element **170** protrudes through an opening in the second end cap **160**).

As in Figure 6, the variant labeled "a" (left-hand side) differs from the variant labeled "b" (right-hand side) in that the variant labeled "a" is provided with coupling means **175** (in particular, a set of protrusions), which are positioned to engage with complementary protrusions **165** in the second end cap **160** when the assembly is pulled up from the side of the first end cap **150.** In the absence of an upward force, there may be a small amount of play between the protrusions **165** and the coupling means **175** in the vertical direction (in the orientation as illustrated), which can accommodate a small amount of thermal expansion of the constituent parts.

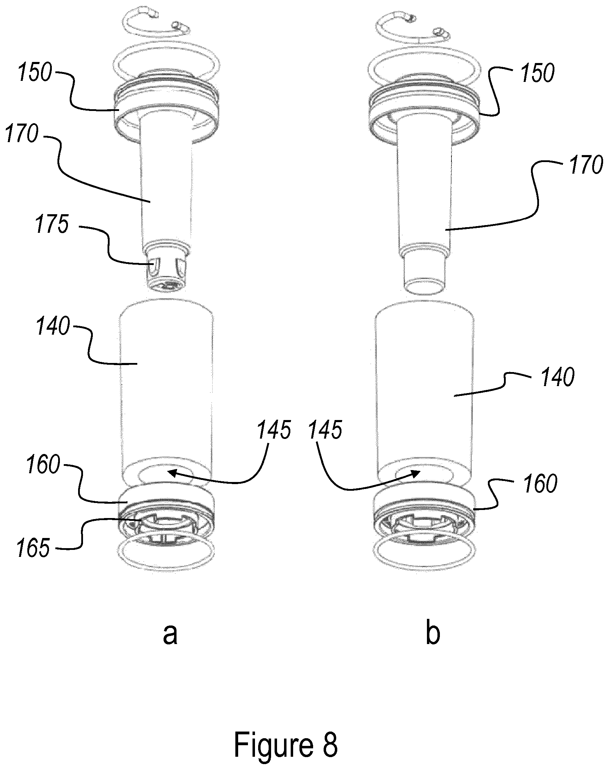

Figure 8 presents exploded perspectives of the same two variants of the filter device according to the present invention.

The device **100** comprises a filter media **140** having an internal cavity **145.** A deformable volume compensating element **170,** has a protruding part that is shaped so as to fit inside said internal cavity **145** in such a way as to substantially fill it. A first end cap **150** is attached to the volume compensating element **170** and designed to be arranged at a first end of the element **140** (the bottom end in the illustrated orientation). A second end cap **160** is designed to be coupled to the top end of the volume compensating element **170** and thus arranged at the second end of the filter media **140** (the top end in the illustrated orientation).

As in Figure 6, the deformable volume compensating element **170** is attached to the first end cap **150,** such that the volume compensating element **170** must be arranged in the internal cavity **145** of the filter media **140** when the first end cap **150** is assembled on to the filter media **140.**

As in Figure 6, the variant labeled "a" (left-hand side) differs from the variant labeled "b" (right-hand side) in that the variant labeled "a" is provided with coupling means **175** (in particular, a set of protrusions), which are positioned to engage with complementary protrusions **165** in the second end cap **160** when the assembly is pulled up from the side of the first end cap **150.**

The aforementioned embodiments all concern volume compensating assemblies comprising a first end cap and an elongate volume compensating element that may be permanently attached to each other or produced as a single part, whereby the second end cap is attached to the former in a separate step, by potting to the filter media and optionally coupling to the elongate volume compensating element itself (e.g., bayonet, snap-fit, etc.). The first end cap is on the side from which the assembly is pulled out of its housing. The principles of the present invention may also be applied to volume compensating assemblies whereby the second end cap is on the side from which the assembly is pulled out of its housing.

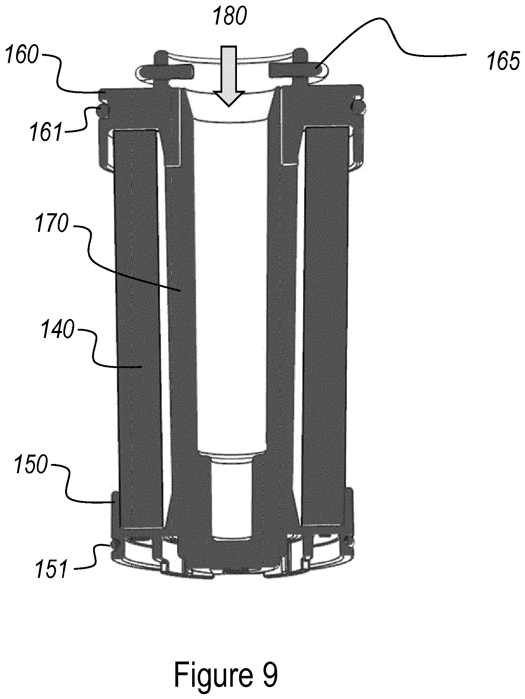

Figure 9 presents a sectional perspective of a filtering device not according to the invention wherein the second end cap is on the side from which the assembly is pulled out of its housing. The same reference numerals have been used to designate the same elements as those that appear in Figures 2-8. The first end cap **150** is shown at the bottom of the assembly in the illustrated orientation. It is of one piece with the elongate volume compensating element **170,** which defines an internal cavity **180** with an open end on the user-accessible side (top side in the illustrated orientation). The second end cap **160** comprises a pull ring **165** arranged to pull the filter media **170** from a housing. The first end cap **150** and the second end cap **160** each comprises a ridge **151', 161'** configured to receive a seal **151, 161,** such as an O-ring. The filter media **140** is potted to both end caps **150, 160.** In this embodiment, there is no risk of detachment of the first end cap **150** from the filter media **140** or from the elongate volume compensating element **170** during removal of the assembly from a housing; however, special care must be taken to ensure that the attachment between the second end cap **160** and the filter media **140** and/or the elongate volume compensating element **170** is sufficiently strong to withstand the tensile force required to pull the assembly out of its housing against the frictional force of the aforementioned seals. For this purpose, coupling means configured to engage with the second end cap in a manner suitable to transmit a pulling force may be provided on the elongate volume compensating element (not illustrated); reference is made to the arrangements shown in the previous figures, which may be applied *mutatis mutandis.*

While the invention has been described hereinabove with reference to specific embodiments, this has been done to clarify and not to limit the invention, the scope of which is determined by the accompanying claims.

## Claims

1. A device (100) for filtering liquids comprising a first end cap (150), an elongate volume compensating element (170) and a substantially tubular filter media (140), wherein said elongate volume compensating element (170) is shaped, in its uncompressed state, so as to fill at least 90% of the volume of an internal cavity (145) of said substantially tubular filter media (140), and wherein said elongate compensating element (170) takes up a reduced volume when subjected to a pressure from the outside, said elongate volume compensating element (170)being attached to said first end cap (150);
**characterized in that**
an end of said substantially tubular filter media (140) is potted to said first end cap (150);
**and in that** said first end cap (150) comprises a pull ring (155) arranged to pull said filter media (140) and said elongate volume compensating element (170)from a housing.

2. The device according to claim 1, further comprising a second end cap (160) arranged at a second end of said filter media (140), wherein said elongate volume compensating element (170) comprises, at its end most removed from said first end cap, coupling means (175) configured to engage with said second end cap (160) in a manner suitable to transmit a pulling force.

3. The device according to claim 2, wherein said coupling means (175) is configured to remain disengaged from said second end cap (160) when said volume compensating assembly is installed and to only engage with said second end cap (160) when said volume compensating element (170) is pulled away from said second end cap (160).

4. The device according to any of the preceding claims, wherein said first end cap (150) comprises a ridge (151') configured to receive a seal (151).

5. The device according to any of the preceding claims, wherein said elongate volume compensating element (170) is substantially cylindrical or frustoconical.

6. The device according to any of the preceding claims, wherein said first end cap (150) is made from a first material and said elongate volume compensating element (170) is made from a second material, said second material having a lower elastic modulus than said first material.

## Patentansprüche

1. Vorrichtung (100) zum Filtern von Flüssigkeiten, die eine erste Endkappe (150), ein längliches Volumenausgleichselement (170) und ein im Wesentlichen rohrförmiges Filtermedium (140) umfasst, wobei das längliche Volumenausgleichselement (170) in seinem unkomprimierten Zustand so geformt ist, dass es mindestens 90 % des Volumens eines inneren Hohlraums (145) des im Wesentlichen rohrförmigen Filtermediums (140) ausfüllt, und wobei das längliche Volumenausgleichselement (170) ein reduziertes Volumen einnimmt, wenn es einem Druck von außen ausgesetzt ist, wobei das längliche Volumenausgleichselement (170) an der ersten Endkappe (150) befestigt ist;
**dadurch gekennzeichnet, dass**
ein Ende des im Wesentlichen rohrförmigen Filtermediums (140) mit der ersten Endkappe (150) vergossen ist;
und dadurch, dass die erste Endkappe (150) einen Zugring (155) umfasst, der angeordnet ist, um das Filtermedium (140) und das längliche Volumenausgleichselement (170) aus einem Gehäuse zu ziehen.

2. Vorrichtung nach Anspruch 1, die ferner eine zweite Endkappe (160) umfasst, die an einem zweiten Ende des Filtermediums (140) angeordnet ist, wobei das längliche Volumenausgleichselement (170) an seinem von der ersten Endkappe am weitesten entfernten Ende eine Kopplungseinrichtung (175) umfasst, die so konfiguriert ist, dass sie mit der zweiten Endkappe (160) in einer Weise in Eingriff kommt, die geeignet ist, eine Zugkraft zu übertragen.

3. Vorrichtung nach Anspruch 2, wobei die Kopplungseinrichtung (175) so ausgelegt ist, dass sie von der zweiten Endkappe (160) gelöst bleibt, wenn die Volumenausgleichsbaugruppe installiert ist, und nur mit der zweiten Endkappe (160) in Eingriff kommt, wenn das Volumenausgleichselement (170) von der zweiten Endkappe (160) weggezogen wird.

4. Vorrichtung nach einem der vorhergehenden Ansprüche, wobei die erste Endkappe (150) eine Rippe (151') aufweist, die zur Aufnahme einer Dichtung (151) ausgebildet ist.

5. Vorrichtung nach einem der vorhergehenden Ansprüche, wobei das langgestreckte Volumenausgleichselement (170) im Wesentlichen zylindrisch oder kegelstumpfförmig ist.

6. Vorrichtung nach einem der vorhergehenden Ansprüche, wobei die erste Endkappe (150) aus einem ersten Material und das längliche Volumenausgleichselement (170) aus einem zweiten Material hergestellt sind, wobei das zweite Material ein niedrigeres Elastizitätsmodul als das erste Material aufweist.

## Revendications

1. Dispositif (100) de filtration de liquides comprenant un premier capuchon d'extrémité (150), un élément allongé de compensation de volume (170) et un milieu de filtration sensiblement tubulaire (140), dans lequel ledit élément allongé de compensation de volume (170), dans son état non comprimé, est mis en forme de manière à remplir au moins 90 % du volume d'une cavité interne (145) dudit milieu de filtration sensiblement tubulaire (140), et dans lequel ledit élément allongé de compensation (170) occupe un volume réduit lorsqu'il est soumis à une pression provenant de l'extérieur, ledit élément allongé de compensation de volume (170) étant fixé audit premier capuchon d'extrémité (150) ;
**caractérisé en ce que**
une extrémité dudit milieu de filtration sensiblement tubulaire (140) est scellée audit premier capuchon d'extrémité (150) ;
**et en ce que** ledit premier capuchon d'extrémité (150) comprend un anneau de traction (155) agencé pour tirer ledit milieu de filtration (140) et ledit élément allongé de compensation de volume (170) hors d'un logement.

2. Dispositif selon la revendication 1, comprenant en outre un second capuchon d'extrémité (160) agencé au niveau d'une seconde extrémité dudit milieu de filtration (140), dans lequel ledit élément allongé de compensation de volume (170) comprend, au niveau de son extrémité la plus éloignée dudit premier capuchon d'extrémité, des moyens d'accouplement (175) configurés pour mettre en prise ledit second capuchon d'extrémité (160) de manière appropriée pour transmettre une force de traction.

3. Dispositif selon la revendication 2, dans lequel lesdits moyens d'accouplement (175) sont configurés pour rester désengagés dudit second capuchon d'extrémité (160) lorsque ledit ensemble de compensation de volume est installé et pour seulement mettre en prise ledit second capuchon d'extrémité (160) lorsque ledit élément allongé de compensation de volume (170) est éloigné dudit second capuchon d'extrémité (160).

4. Dispositif selon l'une quelconque des revendications précédentes, dans lequel ledit premier capuchon d'extrémité (150) comprend une nervure (151') configurée pour recevoir un joint (151).

5. Dispositif selon l'une quelconque des revendications précédentes, dans lequel ledit élément allongé de compensation de volume (170) est sensiblement cylindrique ou tronconique.

6. Dispositif selon l'une quelconque des revendications précédentes, dans lequel ledit premier capuchon d'extrémité (150) est fabriqué à partir d'un premier matériau et ledit élément allongé de compensation de volume (170) est fabriqué à partir d'un second matériau, ledit second matériau ayant un module d'élasticité inférieur audit premier matériau.
